# EUROPÄISCHE PATENTSCHRIFT

(11) **EP 0 672 919 B1**
(45) Veröffentlichungstag und Bekanntmachung des Hinweises auf die Patenterteilung: **10.01.2001**
(21) Anmeldenummer: 95103784.5
(22) Anmeldetag: 15.03.1995
(51) Int. Cl.: G01V 3/12

(54) **Container-Ortungs- und Identifikationssytem, insbesondere Gefahrgutcontainter-Ortungs- und Identifikationssystem**
Container locating- and identifying system in particular for container with a dangerous content
Dispositif pour localiser et identifier un récipient, en particulier un récipient avec un contenu dangereux

(30) Priorität: 15.03.1994 DE 4408802
(43) Veröffentlichungstag der Anmeldung: 20.09.1995
(73) Patentinhaber: SIEMENS AKTIENGESELLSCHAFT, 80333 München (DE); Veers Elektronik + Meerestechnik GmbH, 24159 Kiel (DE)
(72) Erfinder: Armbrecht, Georg, Dipl. Ing., D-22359 Hamburg (DE); Veers, Jens D., D-24116 Kiel (DE); Maas, Günther, Dipl. Ing., D-22391 Hamburg (DE)
(74) Vertreter: Epping, Wilhelm, Dr.-Ing.

(56) Entgegenhaltungen:
- EP-A- 0 601 293
- GB-A- 2 246 270
- US-A- 4 813 025
- US-A- 5 008 661
- US-A- 5 218 366

## Beschreibung

Die Erfindung betrifft ein Ortungs- und Identifikationssystem zum Orten und Identifizieren von auf See, z.B. in Stürmen oder bei Schiffsunglücken, verlorenen Containern, insbesondere Gefahrgutcontainern.

Entsprechend dem zunehmenden allgemeinen Containerverkehr nimmt auch die Zahl der auf See transportierten Gefahrgutcontainer zu. Derartige Container dürfen häufig nach Vorschriften nicht unter Deck gefahren werden, daher besteht stets die Gefahr, daß entsprechende Container in Stürmen oder bei Schiffsunglücken über Bord gehen. Dies hat häufig Umweltschäden o.ä. zur Folge. Außerdem bilden treibende Container eine Gefahr für die Schiffahrt.

Es ist Aufgabe der Erfindung, ein Ortungs- und Identifikationssystem, zum Wiederauffinden und Identifizieren von über Bord von Schiffen gegangenen Containern, insbesondere von Containern mit Gefahrgütern anzugeben, und so bei Bedarf eine schnelle, die Umwelt schonende Bergung der über Bord gegangenen Container zu ermöglichen. Dabei soll eine Aktivierung des Systems bei nahezu allen Lagen des Containers im wasser ermöglicht werden. Insbesondere soll durch die Identifikationsmöglichkeit der über Bord gegangenen Container die Organisation der Bergungsmaßnahmen nach Dringlichkeitsgesichtspunkten ermöglicht bzw. die Ausgabe von Warnhinweisen für die Schiffahrt erleichtert und verbessert werden. Container sinken häufig erst nach längerer Zeit.

Diese Aufgabe wird mit der Merkmalskombination des Anspruchs 1 gelöst. Vorteilhafte Weiterbildungen der Erfindung sind Gegenstand der abhängigen Ansprüche.

Im Rahmen der Erfindung soll insbesondere ein System gezeigt werden, das es ermöglicht, sowohl die Position, die 5 Container- und die Ladungsdaten von über Bord gegangenen Containern anzugeben als auch Angaben über das Schiff zu machen, von dem sie stammen. Dabei sollen die Container in ihrer genauen Lage, auch unter Wasser, zu orten sein. Dazu werden die Gefahrgutcontainer erfindungsgemäß mit Einrichtungen ausgerüstet, über die Daten über den Container, das Schiff und die Ladung und die Position treibender oder gesunkener Container, automatisch ausgelöst an ein Satellitensystem sendbar sind. Die Einrichtungen, die fortlaufend die genaue Position des Containers ermitteln und über ein "Global Positioning System (GPS)" absenden können, ermöglichen in Zusammenwirken mit bestehenden Satellitensystemen, z.B. Safir-R oder Inmarsat-E, die Position und die relevanten Daten jedes verlorengegangenen Containers sofort aufzunehmen und an Bodenstationen weiterzugeben.

Aus der Veröffentlichung in der Rubrik "Forschung und Entwicklung" der Zeitschrift "TR Technische Rundschau", Heft 17, 1992 ist bereits eine Automatikbake bekannt, mit der auf See verlorene Gefahrgüter markiert werden sollen. Diese, sogenannten "SCOLD-Baken" lassen sich an Frachtcontainern anbringen und bei Ankunft im Zielhafen wieder abnehmen und erneut verwenden. Fällt ein Behälter über Bord, dann aktiviert sich die Bake automatisch beim Eintauchen in das Wasser und beginnt Sonarsignale auszusenden, die es erlauben, den Container in jeder Wassertiefe zu orten. Außerdem setzt sie eine auffällig gefärbte und lichtreflektierende, auf der Wasseroberfläche schwimmende Boje frei, die ihre Position durch periodische, von Satelliten aufgefangene, Funksignale kennzeichnet. Bake und Boje sind über eine 3 Kilometer lange Leine miteinander verbunden. Sinken Container auf mehr als 3000 m Tiefe, dann wird die Leine selbsttätig gekappt. Diese bekannten Baken haben sich bisher in der Schiffahrt noch nicht durchgesetzt, da sie die eingangs beschriebenen Aufgaben nicht erfüllen können.

Dabei ist besonders hinderlich, daß die ausgesandten Signale keine speziellen Container- und Ladungsdaten, Schiffsdaten o.ä. enthalten, so daß z.B. die Befolgung von Prioritäten bei der Bergung nicht möglich ist. Auch die Verantwortung für treibende oder gesunkene container ist durch die bekannten Baken nicht klärbar. Desgleichen die Versicherungssituation.

Eine Einrichtung zur Ortung und Identifikation von mobilen Objekten ist prinzipiell aus der Schrift EP-A-0 582 073 bekannt. Eine Einrichtung zur Identifikation von Gefahrgut container ist prinzipiell aus der Schrift US-A-5 008 661 bekannt. Diese Einrichtungen können jedoch die gestellte Aufgabe, bei nahezu allen Logen eines von Bord eines Schiffes gegangenen Containers des Ortungs- und Identifikationssystem zu aktivieren, nicht lösen .

Nähere Einzelheiten des erfindungsgemäßen Systems, der Einrichtungen, der Arbeitsweise und der technischen Komponenten ergeben sich aus der Beschreibung, in der, jeweils mit Bezug auf eine anschließende Detailbeschreibung, auch die Zeichnungen enthalten sind. Aus den Zeichnungen und den jeweiligen Beschreibungsteilen sind ebenso wie aus den Unteransprüchen noch weitere, auch erfindungswesentliche Einzelheiten entnehmbar.

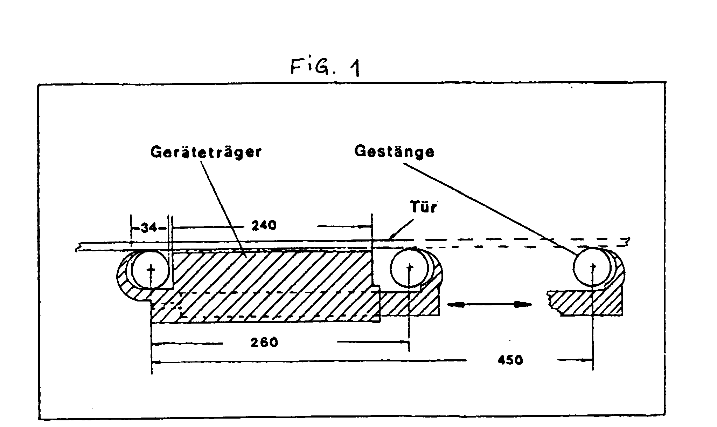

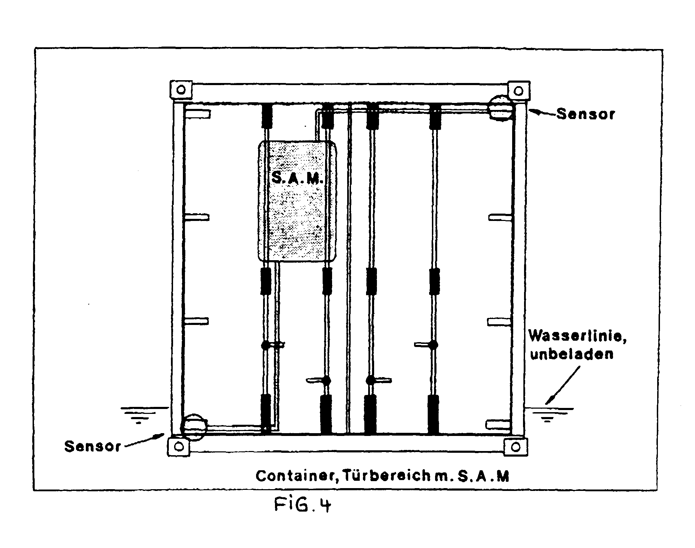

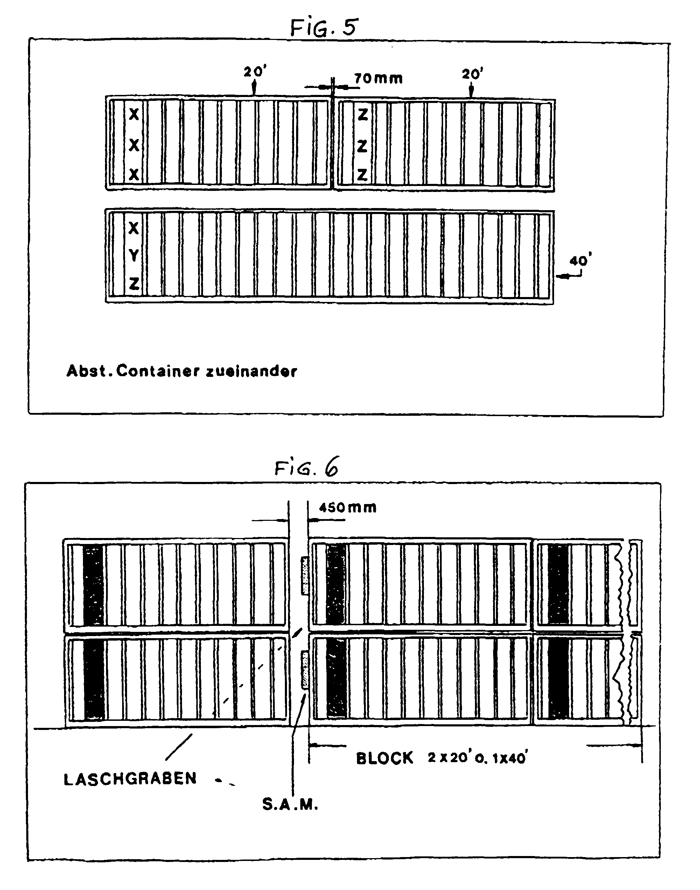

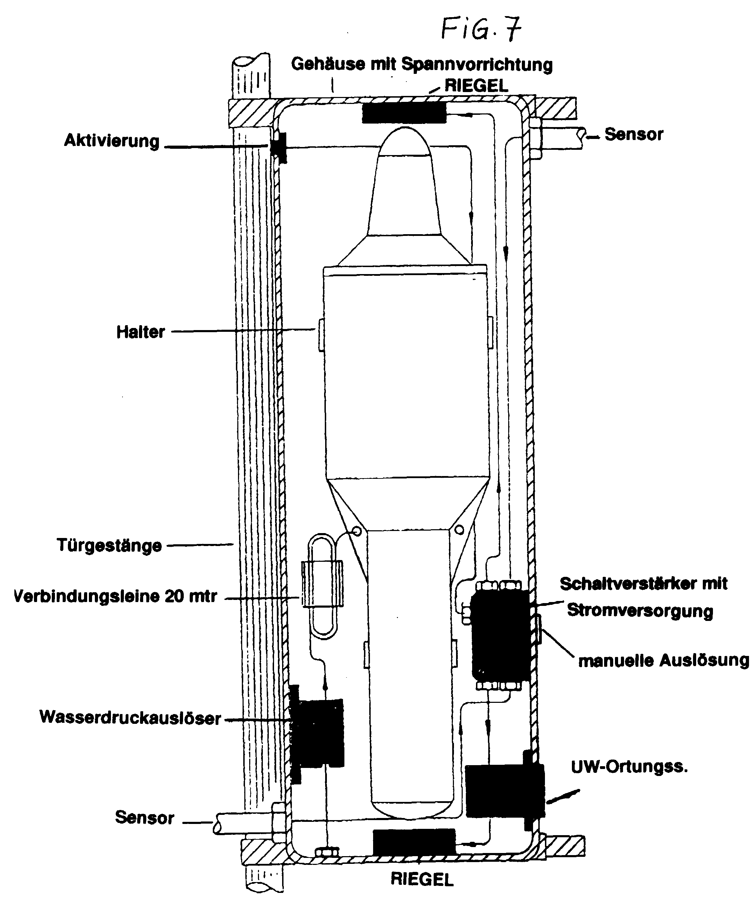

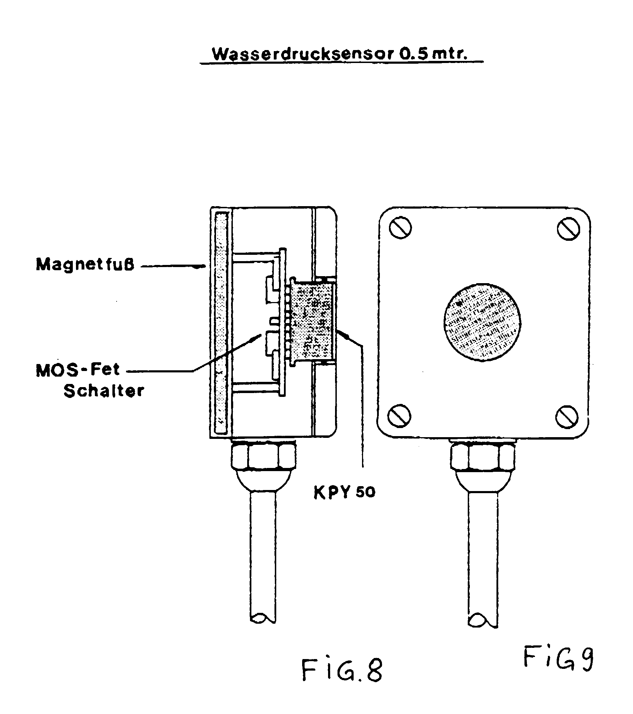

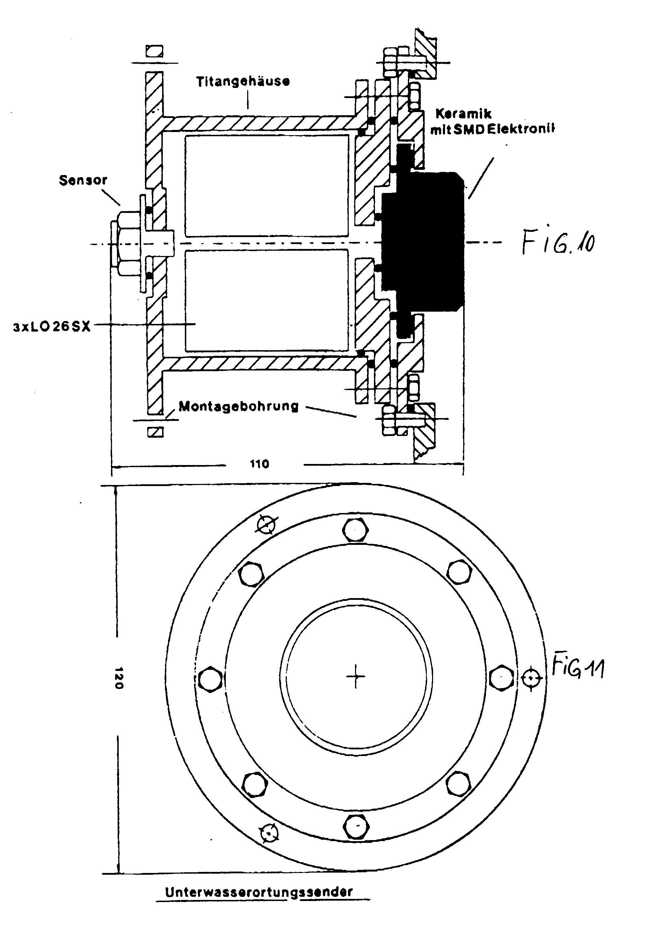

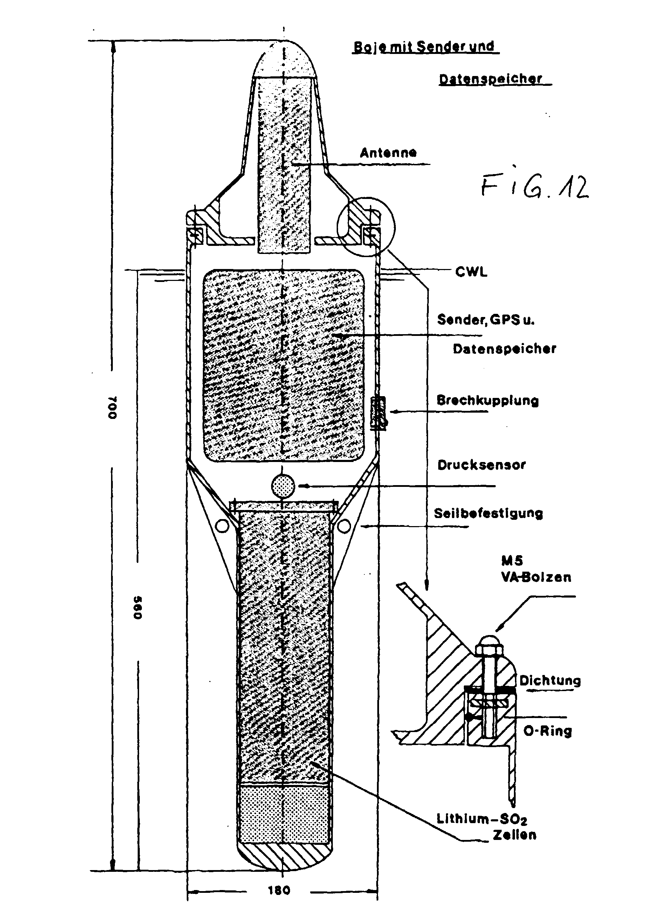

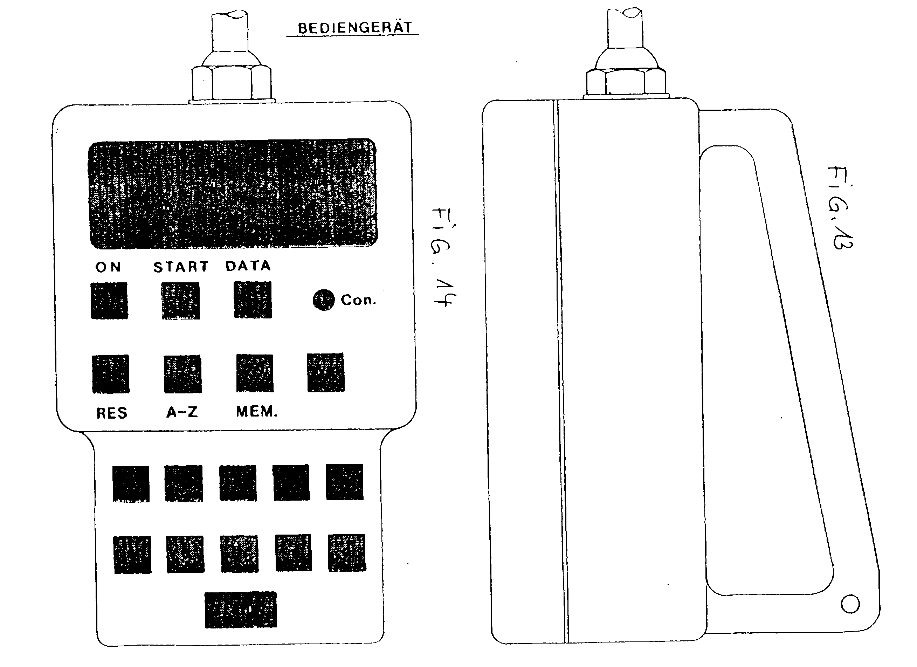

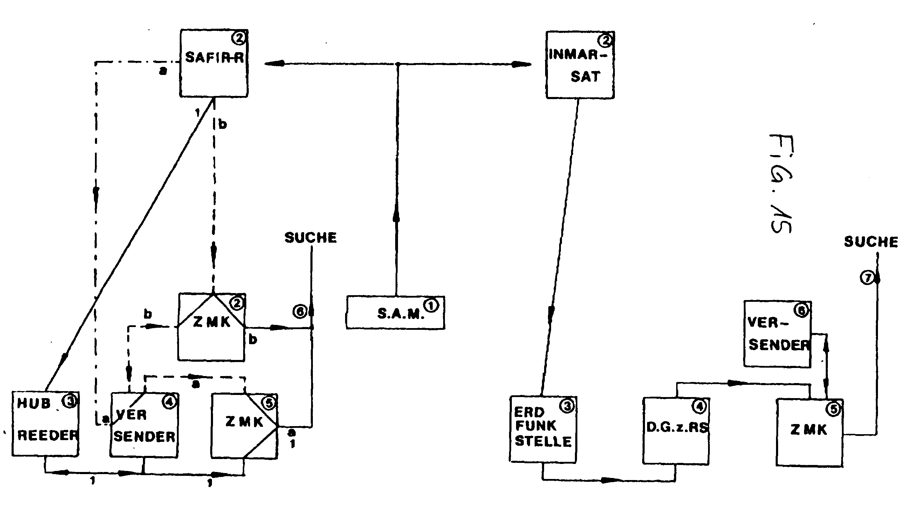

Die Figuren 1 - 15 zugen verschiedene Ansichten von vorteilhaften Ausbildungen des Container- Ortungs- und Identifikationssystems.

Spezieller Beschreibungs - und Zeichnungsteil :

Eine mögliche technische Lösung soll das sich selbsttätig aktivierende Meldesystem für Container, kurz MERLIN S.A.M. genannt, aufzeigen.

Die sieben grundsätzlichen Anforderungen an das System sollten sein:
- Schnelle Montage- und Demontage
- Aktivierung bei Wasserkontakt und Freischwimmeinrichtung bei Sinken des Containers
- Automatisches Speichern, Aktualisieren und Senden der Positions- und Containerdaten über Satellit
- Speichern der letzten Position vor dem Versinken eines Containers
- Senden der letzten Position vor dem Versinken und der gespeicherten Daten
- Unterwasserortungsfähig mit bereits vorhandenen Systemen
- Schnelle externe Dateneingabe von Schiffsnamen, Reederei, Bauart (Typ), Prefix und Nummer des Containers mit Gefahrgut (IMDG-Code) auch von ungeschultem Personal

### 1. Beschreibung MERLIN S.A.M.

Das Ortungssystem MERLIN S.A.M. setzt sich aus zwei Hauptteilen zusammen. Das sind zum einen der Geräteträger mit Boje und Unterwasserortungssender sowie zum anderen dem Bedienteil als Handgerät. Nach Montieren des Geräteträgers an dem betreffenden Container können die dem Container zugeordneten Daten mit dem Handgerät auf einfache Weise in den Speicher der Boje eingegeben werden. Die im Handgerät gespeicherten Schiffsdaten werden dabei automatisch mit eingelesen. Dieser Vorgang kann in den Containerterminals kurz vor dem Verladen, oder an Bord des Schiffes während des Laschvorganges erfolgen. Voraussetzung dafür ist, daß an Bord des Schiffes eine Anzahl von Geräteträgern und ein oder zwei Handgeräte vorhanden sind. (s.Abb.) Die Eingabe der Containerdaten kann über eine alphanumerische Anzeige im Handgerät kontrolliert werden.

Vorstellbar wäre auch, die Geräteträger von den Betreibern der Containerterminals oder den Versendern montieren zu lassen und lediglich die Codierung mit dem Handgerät vom Schiffspersonal vorgzunehmen.

Im Fall des Überbordgehens des Containers wird durch Drucksensoren der Geräteträger geöffnet, die Boje wird freigegeben und nimmt den Betrieb auf.

Sinkt der Container, wird die Boje von diesem getrennt. Der Untergangsort wird durch den GPS-Empfänger festgehalten und gesendet, ebenso die gespeicherten Schiffs- und Containerdaten.

Die Spannungsversorgung der Boje gewährleistet einen Dauerbetrieb von mindestens 96 Stunden.

### 2. Montagepunkte und Aktivierung

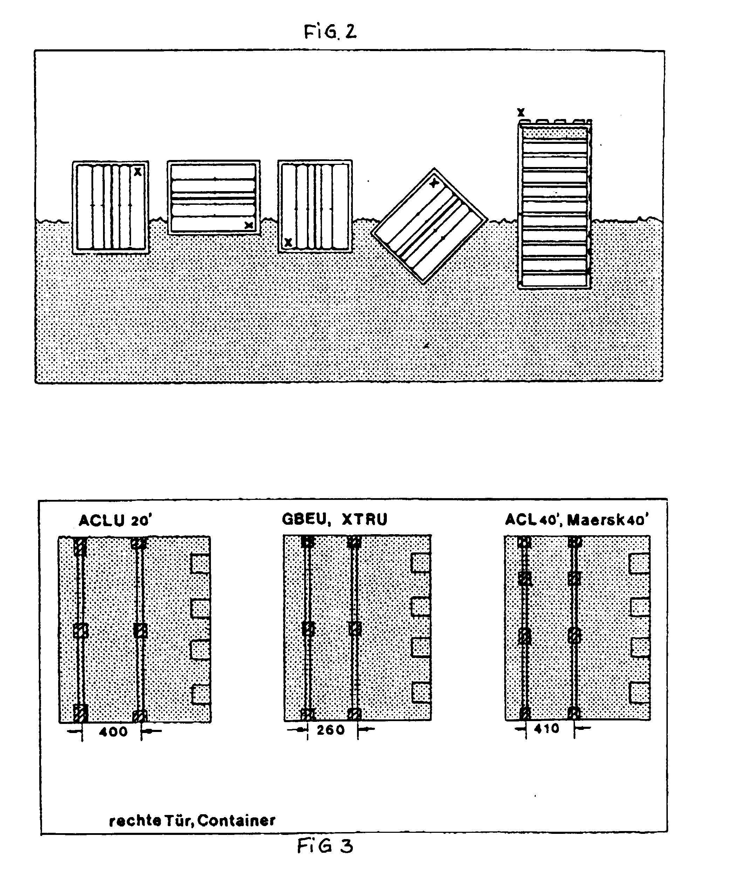

Das Hauptproblem bei Ortungshilfen für Container liegt in der Anbringung solcher Geräte. Bedingt durch die unterschiedlichen Bauarten von Containern (Profilgebung der Wände etc.) wurde eine Position gesucht, die bei allen Containern zumindest eine etwaige Baugleichheit aufweist. Diese findet man bei fast allen Containern im Türbereich, speziell im Durchmesser der Türgestänge (34 mm), der Eckbeschläge und dem Abstand der zwei Türgestänge auf einem Türflügel. Dieser variiert z.B. bei Containern der Typen ACLU 20', GBEU, XTRU, ACL 40' und Maersk 40' zwischen 260 und 400 mm. Die Differenz ist durch geeignete Spannvorrichtungen zu überbrücken. (s.Abb. 1,2 u.3)
Durch den Mindestabstand von 260 mm ergibt sich gleichzeitig die maximale Breite des Geräteträgers.

Ein weiteres Problem stellt die automatische Aktivierung des Systems dar. Der Beladung und den daraus resultierenden Schwimmlagen eines Containers muß Rechnung getragen werden. (s.Abb. 3)

Daraus ergab sich, daß eine diagonale Anordnung von Wasserdrucksensoren im Türbereich sowie die Integration eines lageabhängigen Schalters im Geräteträger bei nahezu allen Lagen des Containers im Wasser zur Aktivierung des Systems führen.

Das letzte Problem, das es zu lösen galt, war der Abstand der Container an Bord. Herbei war noch zu beachten, daß oftmals auf dem Platz eines 40'-Containers auch zwei 20'-Container abgestellt werden. (s. Abb. Trenn- und Stauplan)

Grundsätzlich werden an Deck die Türbereiche bugabgewandt gestaut. Der Abstand von zwei 20'-Containern beträgt dann ca. 70 mm (Tür an Rückwand). Der Abstand innerhalb zweier Containerblocks beträgt aber ca. 450 mm. Daraus resultiert, daß Gefahrgutcontainer mit ihrem Türbereich immer in Richtung der Gräben zwischen den einzelnen Blocks gestaut werden sollten. So ist ausreichend Platz vorhanden, ein Ortungssystem zu plazieren. Dennoch sollte das System so wenig wie möglich auftragen, damit eine unnötige Behinderung der Laschmannschaft in den Gräben zwischen den Containerblocks vermieden wird. Dieses bedarf aber einer internationalen Regelung des Stauens. Eine Grundlage dafür wäre in der GGV-See §§4,10 Abs.1,3 und §13 zu finden.

### 3. Bestandteile des MERLIN S.A.M.

### 3.1. Geräteträger

### Bestandteile

Der Geräteträger des Systems besteht aus einem wasserdichten, starkwandigen Aluminiumgußgehäuse mit der angeformten Spannvorrichtung. Innerhalb des Gehäuses befinden sich:
- Boje mit Verbindungsleine
- Wasserdruckauslöser
- Unterwasserortungssender
- Öffnungsmechanismus Geräteträger
- Stromversorgung für Öffnungsmechanismus
- Anschlußbox mit Schaltverstärker für Drucksensor und lageabhängigem Schalter
- Dateneingabebuchse Bedienteil
- Dateneingabebrechkupplung zur Boje

### Funktion

Mit der Montage am Container ist das System über den seitlich am Gehäuse angebrachten Schalter im "stand by Modus". Durch die Rohre der Türgestänge wird der Tastschalter betätigt. Bei Demontage des Geräteträgers wird das System automatisch deaktiviert.
Die diagonal an den Ecksäulen befestigten Drucksensoren lösen bei einer Eintauchtiefe von 0,5 m einen elektrischen Impuls aus, der ein Öffnen des Geräteträgers bewirkt. Dabei werden mittels eines Spindeltriebes zwei Verriegelungen geöffnet. Durch Federkraft wird der Deckel mit der Bojenhalterung aufgedrückt und die Boje fällt heraus. Mittels 10 m Sicherungsleine bleibt die Boje mit dem Container verbunden. Sinkt der Container, bewirkt ein Wasserdruckauslöser bei einer Wassertiefe von 20 m die Trennung von Boje und Container. Die Boje schwimmt frei auf und sendet neben den gespeicherten Daten die letzte Position dem Sinken. Gleichzeitig schaltet sich über einen Drucksensor der im Geräteträger fest montierte Unterwasserortungssender bei einer Wassertiefe von zehn Metern ein. Dieser gibt dann über einen Zeitraum von mehr als 30 Tagen das in Punkt 3.3 genau erläuterte Signal ab. Der gleiche Vorgang beginnend mit dem Öffnen der Verriegelung startet, wenn anstatt des Impulses der Drucksensoren ein Schaltimpuls vom lageabhängigen Schalter dem Schaltverstärker zugeführt wird.

### 3.2. Wasserdrucksensor 0,5 m

### Bestandteile

- Gehäuse
- Drucksensor
- Verbindungskabel
- Magnetfuß
- Kabelclips

### Funktion

Der Wasserdrucksensor besteht aus einem Siliziumdrucksensor der Fa. Siemens aus der KSY-Reihe. Über einen MOS-Fet-Schalter wird bei einer vorher eingestellten Wassertiefe (0,5 m) der Schaltverstärker im Geräteträger aktiviert, welcher wiederum den Öffnungsmechanismus in Betrieb setzt. Der Wasserdrucksensor wird mit einem Magnetfuß an den Eckpunkten des Containers auf den Türecksäulen befestigt. Das Verbindungskabel zum Geräteträger wird mittels Clipverschluß am Türgestänge und in den Gummidichtungen der Tür gesichert. Somit ist eine schnelle Montage am Container möglich.

### 3.3. Unterwasserortungssender 37,5 kHz

### Bestandteile

- Gehäuse mit Montageflansch
- 37,5 kHz Schwinger
- Elektronik
- Batteriepack
- Wasserdrucksensor

### Funktion

Im Geräteträger ist ein Unterwasserortungssender integriert, der mit einer Frequenz von 37,5 kHz arbeitet. Diese Frequenz ist in der internationalen Luftfahrt bestimmt für Unterwasserortungssender, die an Flight-Recordern und Cockpit-Voice-Recordern montiert sind. Der von uns zu verwendende Sender arbeitet mit Impulslängen von 20 ms und einer Impulsfolge von drei Impulsen pro Sekunde. Die Geräte der Luftfahrt arbeiten mit einer Impulslänge von 0,9 ms und einer Impulsfolge von 0,9 Impulsen pro Sekunde. Dadurch ist ein eindeutiges Unterscheiden der beiden Unterwasserortungssender gewährleistet. Somit ist es möglich, für zwei verschiedene Anwendungsfälle auf ein vorhandenes Ortungssystem zurückzugreifen. Durch die im Sender integrierten Lithiumzellen ist ein Dauerbetrieb von über 30 Tagen gewährleistet. Der gesamte Unterwasserortungssender ist in einem Gehäuse aus einer Titanlegierung untergebracht, so daß ein zuverlässiger Betrieb in Wassertiefen weit über 500 m möglich ist.
Der ausgesandte Schalldruck beträgt 168 db µP/m.
Das Meeresrauschen bei Seegang der Stärke 3 hat einen Pegel von ca. 50 db. Legt man einen Pegel von 15 db für das Signal/Rauschverhältnis des Ortungsempfängers zugrunde, subtrahiert dann diese beiden Werte von 168 db, so erhält man 103 db, woraus sich bei einer Frequenz von 37,5 kHz eine theoretische Reichweite von 3200 m ergibt. Die Aktivierung Erfolg über einen Siliziumdrucksensor.

### 3.4. Boje mit Datenspeicher und Sender

### Bestandteile

- Bojenkörper
- Sender mit GPS und Datenspeicher
- Antenne
- Wasserdrucksensor
- Brechkupplung
- Verbindungsleine 10 m
- Batteriepack
- Reflexstreifen

### Funktion

Nach Aktivierung des Geräteträgers durch die Wasserdrucksensoren fällt die Boje aus der Halterung. Über eine Leine bleibt die Boje mit dem Container verbunden. Ist die Boje aus der Halterung gelöst beginnt der Programmablauf. Der GPS-Empfänger bestimmt die Position und gibt seine Daten über eine serielle Schnittstelle (RS 232) an die Sendeeinheit. Gleichzeitig werden die vom Bediengerät vor Beginn der Reise eingegebenen Daten des Containers dem Sender zugeführt. Der Sender nimmt seinen Betrieb auf und sendet die gesamten Daten. Dabei wird die Position ständig aktualisiert. Beginnt der Container zu sinken, zieht er die Boje mit in die Tiefe. Bei einer Wassertiefe von 10 m werden die zuletzt empfangenen GPS-Daten als Wegpunkt gespeichert. Erreicht der Container eine Tiefe von ca. 20 m, wird die Boje mittels eines Wasserdruckauslösers vom Container getrennt. Nach dem Auftauchen der Boje sendet diese nun den letzten Wegpunkt mit den Containerdaten. So kann der Untergangsort des Containers festgelegt werden.
Der Bojenkörper besteht aus hochfestem, chemikalienbeständigen Kunststoff. Die Daten des Containers werden über eine Brechkupplung am Bojenkörper dem Speicher der Boje zugeführt. Als Stromversorgung dienen Lithium SO₂ Hochstromzellen, die eine Lagerfähigkeit von 5-10 Jahren aufweisen.

Die zu speichernden Daten sind:
1. Vom Bedienteil
   - Schiffsname
   - Reeder
   - Rufzeichen
   - Typ
   - Gefahrgutklasse
   - Prefix und Nummer des Containers
2. Vom Geräteträger bzw. Boje
   - Position
   - Position des Versinkens
   - Uhrzeit, Datum

### 3.5. Bedienteil

### Bestandteile

- Handgerät mit wasserdichter Tastatur
- Alphanumerische Anzeige
- Verbindungskabel
- Speicher mit Schiffsdaten

### Funktion

Das Bediengerät ist eine den Umständen des Bordbetriebs entsprechend ausgelegte Einheit. In der Speichereinheit befinden sich die gesamten Schiffsdaten. Vom Bediener müssen lediglich die Daten des betreffenden Containers eingegeben werder. Die Stromversorgung des Bedienteils besteht aus Nickel-Cadmiumzellen. Die Dateneingabe des Containers erfolgt ähnlich der eines Taschenrechners, um leichte Programmierung für ungeschultes Personal zu ermöglichen. Das Ändern der Stammdaten des Schiffes muß über bestimmte Steuerbefehle ausgeführt werden, um ungewollte Veränderungen zu verhindern. Die Datenübertragung erfolgt über eine Steckerverbindung. Nach erfolgter Datenübertragung muß das Gerät in einer eigens dafür ausgelegten Ladestation, die gleichzeitig Aufbewahrungsort ist, gelagert werden, damit die Stromversorgung des Bedienteils jederzeit den optimalen Ladezustand hat.

### 4. Satellitensysteme

Als derzeit zur Verfügung stehende Systeme bieten sich an:
- Inmarsat (siehe Anlage)
- Safir - R (siehe Anlage)

### 4.1. INMARSAT - E

Durch die geostationären Positionen der Inmarsat-Satelliten weist dieses System bestechende Vorteile auf. Diese liegen in der Kürze der Übertragungszeit und der Abdeckung von 99% aller Seegebiete der Erde. Als Zweites ist anzuführen, daß bei der Inmarsat-Organisation ein logistischer Aufbau und die Zuführung der zu übertragenen Daten über nationale und internationale Telefon- und Telexleitungen an - derzeit allerdings noch nicht eingerichtete Meldeköpfe - vorhanden ist.
Als Nachteil ist anzuführen, daß diese Meldekanäle zur Zeit bei Inmarsat leider nur für Inmarsat-E Seenotfunkbaken genutzt werden können.

### 4.2. SAFIR-R

Das ab Sommer 1994 zur Verfügung stehende Satellitenprogramm für globale Z weiweg-Datenkommunikationsdienste mit dem Satelliten Safir-R wäre eine weitere Möglichkeit, satellitenge-stützte Meldesysteme für in der See treibende Container zu nutzen.Die Sendestationen, kurz Microstationen genannt, sind kleine kompakte Geräte, die vom Hersteller mit Antennen kleiner Abmessungen, GPS und einer Schnittstelle RS 232 ausgestattet sind (s. beigefügtes Datenblatt). Auch ein weltweiter Einsatz des Gerätes ist gewährleistet. Der Unterschied zum Inmarsat-System liegt in der Zugriffszeit zum Satelliten. Durch die geostationären Positionen der Inmarsat-Satelliten ist eine sehr kurze Zugriffszeit gewährleistet, während durch die orbitale Umlaufzeit des Safir-Systems von 98 Minuten noch eine etwas längere Alarmierungszeit akzeptiert werden muß.
Nach dem Stationieren von Safir 1 im Jahr 1995 wird dann die Alarmierungszeit verkürzt. Der Faktor Zeit wurde jedoch bei der Entwicklung von MERLIN S.A.M. berücksichtigt (s. 3.1 und 3.4, Speicherung Untergangsposition).
Wie beim Inmarsat-System steht eine zentrale Empfangsstation (HUB, s. Anlage) zur Verfügung, von der die vom Satelliten übermittelten Daten über das Telekommunikationsnetz an die zuständigen Meldeköpfe weitergeleitet werden können.

### 5. Zusammenfassung

Mit dem System MERLIN S.A.M. sollte nur der mögliche Weg einer Lösung aufgezeigt werden. Durch die Komplexität der Problematik, die zur Verbesserung der Auffindung von in die See gespülten Containern beitragen kann, wird es auch in den folgenden Jahren sicher den einen oder anderen technischen Fortschritt geben, der ein solches System kleiner und für den Anwender noch einfacher macht. Es wurde nicht auf das Problem der Container eingegangen, die unter Deck gestaut werden. Sicher sind einige Teile des MERLIN S.A.M. auch für diesen Fall einsetzbar. So ist es denkbar, daß durch das Aufschwimmen einer Boje auch die Untergangsstelle eines Schiffes angezeigt werden könnte. Auch für das Problem der Montage solcher Geräte am Container bedarf es für die Zukunft einer gesetzlichen Regelung. So ist denkbar, daß dann in Bauvorschriften für Container jeweils in den Seitenwänden oder im Dachbereich Mulden oder Kästen vorgesehen werden, wo Ortungshilfen leicht montierbar sind und vor allen Dingen nicht mehr über die Flächen von Containern herausragen würden. Denkbar wäre auch, daß Gefahrgutcontainer bereits beim Bau als solche klassifiziert werden, Ortungsgeräte fest eingebaut und die Dateneingabe in diesem Fall schon beim Versender vorgenommen werden könnte. In diesem Fall wäre lediglich pro Schiff ein Bediengerät nötig, um die Schiffsdaten automatisch in das Ortungsgerät einzuspeisen.
Ein weiterer Schwerpunkt ist die Schaffung von Meldewegen. Anzustreben wäre eine zentrale Meldestelle je Hoheitsgebiet. Eine Zuständigkeit für das betroffene Seegebiet ergäbe sich aus der Positionsangabe der Boje. Selbstverständlich müßten diese Meldestellen international kooperieren. Vorstellbar wäre zum Beispiel in Deutschland die zentrale Seenotleitstelle Bremerhaven, oder das WSA Cuxhaven als Meldekopf mit Empfangsstation. Eine weitere Möglichkeit wäre, die Meldepflicht der Reedereien einzuführen. Dazu böte sich das System Safir-R an.

### Beispiel:

Reederei X stationiert eine Anzahl n von Geräteträgern, die speziell für diese Reederei codiert sind, an Bord ihrer Schiffe. In der Verwaltung der Reederei befindet sich die Empfangsstation. Im Verlustfall meldet die Boje an die Empfangsstation Schiffs- und Containerdaten. Anhand der der Reederei vorliegender Unterlagen kann diese Angaben über den Inhalt des Containers machen. Auch ein Informationsaustausch zwischen Reederei und Versender wäre denkbar Liegen der Reederei alle relevanten Daten vor, leitet diese die gesammelten Daten an die zuständigen Meldeköpfe weiter. Das setzt natürlich eine außergewöhnliche Meldedisziplin voraus, für die der Gesetzgeber die nötigen Grundlagen schaffen müßte.

## Patentansprüche

1. Container- Ortungs- und Identifikationssystem zum Orten und Identifizieren von auf See, z.B. in Stürmen oder bei Schiffsunglücken von Bord gegangenen Containern, insbesondere Gefahrgutcontainern, das die Container wiederauffindbar und identifizierbar macht, bestehend aus einem Container und einer programmierbaren Sendeeinrichtung, die sich selbsttätig aktiviert, wenn der Container über Bord gegangen ist und ein, insbesondere von Satelliten empfangbares und anpeilbares, Signal abstrahlt, das das Wiederauffinden und Identifizieren des Containers ermöglicht,
wobei die programmierbare Sendeeinrichtung umfasst:
- einen Geräteträger mit einem Positions- und Identifikationssignal-Sendegerät mit einer Schwimmboje, und mit einem Unterwasser-Ortungssender;
- ein tragbares Dateneingabe-Handgerät zur Eingabe von Container-, Ladungs-und Schiffsdaten in das Sendegerät; sowie
- zumindest zwei am Container befestigte Wasserdrucksensoren die im
Türbereich in diagonaler Eckanordnung befestigt sind;
wobei die programmierbare Sendeeinrichtung ein Positions- und
Identifikationssignal aussendet, wenn die Wasserdrucksensoren das Eintreten von Wasserdruck anzeigen, und wobei die Übermittlung von Positions- und
Identifikationsdaten des Containers, ausgelöst durch die Wasserdrucksensoren am Container, über ein bekanntes Satellitensystem erfolgt.

2. Container- Ortungs- und Identifikationssystem nach Anspruch 1, wobei daß im tragbaren Dateneingabe-Handgerät (52,53) Schiffsdaten speicherbar sind, so daß ein Identifikationssignal, z.B. mit Container-Frachtdaten, Schiffsdaten, Ereigniszeit und Containerposition bildbar ist.

3. Container- Ortungs- und Identifikationssystem nach Anspruch 1 oder 2, wobei daß das tragbare Dateneingabe-Handgerät (52,53) als autonom arbeitsfähiges Gerät mit eigener Energieversorgung ausgebildet ist, das vorzugsweise mit einer Steckverbindung, aber auch drahtlos, mit dem Sendegerät (22,54) in Datenaustauschverbindung gebracht werden kann.

4. Container- Ortungs- und Identifikationssystem nach Anspruch 1, 2 oder 3, wobei daß sie ontainerbezogene Daten, Positionsdaten, insbesondere zum Zeitpunkt der Aktivierung, schiffsbezogene Daten und spezielle Ladungsdaten aufweist, die über ein selbsttätig aktivierbares und programmierbares Positions- und Identifikationssignal-Sendegerät (22,54) und ein Satellitensystem (52,53) an eine Bodenstation (57,61) sendbar sind.

5. Container-Ortungs- und Identifikationssystem nach Anspruch 4, wobei daß sie mit einem tragbaren Dateneingabe-Handgerät (52,53) verbindbar ausgebildet ist, durch das containerspezifische Daten, ladungsspezifische Daten, Schiffsdaten etc. sowie selbsttätig generierte Positionsdaten, insbesondere in Verbindung mit einem GPS-System, speicher- und sendbar sind.

6. Container-Ortungs- und Identifikationssystem nach Anspruch 4 oder 5, wobei daß sie in einem Geräteträger (1) angeordnet ist, der im Türbereich der Container, insbesondere am Türgestänge (2), befestigt ist.

7. Container-Ortungs- und Identifikationssystem nach Anspruch 6, wobei daß der Geräteträger (1) eine einstellbare Halterungsbreite aufweist und an Türgestänge-Abstände zwischen 260 mm und 450 mm anpaßbar ausgebildet ist.

8. Container-Ortungs- und Identifikationssystem nach Anspruch 4, 5, 6 oder 7, wobei daß sie an dem Container (11) zwei Wasserdrucksensoren sowie am Geräteträger (1) einen Wasserdrucksensor (25) und einen Aktivierungssensor (31) aufweist.

9. Container-Ortungs- und Identifikationssystem nach Anspruch 4,5,6,7 oder 8, wobei daß sie einen Unterwasser-Ortungssender (27) aufweist, der mit einer Frequenz von 37,5 kHz arbeitet und insbesondere mit Impulslängen von 20 msec und einer Impulsfolge von drei Impulsen pro Sekunde arbeitet.

10. Container-Ortungs- und Identifikationssystem nach einem oder mehreren der vorhergehenden Ansprüche, wobei daß das Positions- und Identifikationssignal-Sendegerät (22,54) eine ständige Positionskorrektur-Vorrichtung aufweist, die eine ständige Positionsaktualisierung ermöglicht.

## Claims

1. Container location and identification system for locating and identifying containers, in particular containers with dangerous goods, which have gone overboard at sea, for example in storms or in the case of shipping accidents, which system makes the containers retrievable and identifiable, consisting of a container and a programmable transmitting device which is automatically activated when the container has gone overboard and emits a signal which can be received and located in particular by satellites and which makes the retrieval and identification of the container possible,
with the programmable transmitting device comprising:
- an apparatus rack with a position and identification signal transmitter with a floating buoy, and with an underwater location transmitter;
- a portable data input hand-held device for the input of container, freight and ship data into the transmitter; and
- at least two water pressure sensors secured to the container, which are secured in the door region in diagonal corner arrangement;
with the programmable transmitting device emitting a position and identification signal if the water pressure sensors display the occurrence of water pressure, and with the communication of position and identification data of the container, triggered by the water pressure sensors on the container, taking place by way of a known satellite system.

2. Container location and identification system according to claim 1, wherein ship data can be stored in the portable data input hand-held device (52, 53), so that an identification signal, for example with container freight data, ship data, time of event and container position can be formed.

3. Container location and identification system according to claim 1 or 2, wherein the portable data input hand-held device (52, 53) is constructed as an autonomously operable device with its own power supply, which device can be connected in terms of data exchange to the transmitter (22, 54), preferably by way of a plug-in connection, but also wirelessly.

4. Container location and identification system according to claim 1, 2 or 3, wherein it has container-related data, position data, in particular at the instant of activation, ship-related data and specific freight data which can be transmitted to a ground station (57, 61) by way of a programmable position and identification signal transmitter (22, 54), which can be automatically activated, and a satellite system (52, 53).

5. Container location and identification system according to claim 4, wherein it is constructed so as to be connectable to a portable data input hand-held device (52, 53), by means of which container-specific data, freight-specific data, ship data etc. and automatically generated position data, in particular in conjunction with a GPS system, can be stored and transmitted.

6. Container location and identification system according to claim 4 or 5, wherein it is arranged in an apparatus rack (1) which is secured in the door region of the containers, in particular to the door support (2).

7. Container location and identification system according to claim 6, wherein the apparatus rack (1) has an adjustable mounting width and is constructed so as to be adaptable to door support distances between 260 mm and 450 mm.

8. Container location and identification system according to claim 4, 5, 6 or 7, wherein on the container (11) it has two water pressure sensors and on the apparatus rack (1) a water pressure sensor (25) and an activation sensor (31).

9. Container location and identification system according to claim 4, 5, 6, 7 or 8, wherein it has an underwater location transmitter (27) which operates at a frequency of 37.5 kHz and operates in particular with pulse lengths of 20 msec and a pulse sequence of three pulses per second.

10. Container location and identification system according to one or more of the preceding claims, wherein the position and identification signal transmitter (22, 54) has a constant position-correction device which makes a constant updating of position possible.

## Revendications

1. Système de localisation et d'identification de conteneurs pour localiser et identifier des conteneurs passés par-dessus bord en mer, par exemple dans des tempêtes ou en cas de naufrage de navires, notamment des conteneurs de produits dangereux, qui permet de retrouver et d'identifier les conteneurs, qui est constitué d'un conteneur et d'un dispositif d'émission programmable qui s'active automatiquement si le conteneur est passé par-dessus bord et émet un signal, qui peut être reçu et repéré notamment par des satellites et qui permet de retrouver et d'identifier le conteneur,
le dispositif d'émission programmable comprenant :
- un support d'appareil comportant un appareil d'émission de signal de position et d'identification ayant une bouée flottante, et ayant un émetteur de localisation sous-marine ;
- un appareil manuel d'entrée de données portable pour entrer des données relatives aux conteneurs, au chargement et au navire dans l'appareil d'émission ; ainsi que
- au moins deux capteurs de pression d'eau fixés aux conteneurs qui sont fixés à la zone de porte en étant disposée en diagonale dans les angles ;
le dispositif d'émission programmable émettant un signal de position et d'identification si les capteurs de pression d'eau indiquent l'apparition d'une pression d'eau, et la transmission des données de position et d'identification du conteneur, déclenché par les capteurs de pression d'eau sur le conteneur, s'effectuant par l'intermédiaire d'un système satellite connu.

2. Système de localisation et d'identification de conteneurs suivant la revendication 1, des données relatives au navire pouvant être mises en mémoire dans l'appareil (52, 53) manuel d'entrée de données portable, si bien qu'il peut être formé un signal d'identification, par exemple avec des données relatives au fret du conteneur, des données relatives au navire, la date de l'événement et la position du conteneur.

3. Système de localisation et d'identification de conteneurs suivant la revendication 1 ou 2, l'appareil (52, 53) manuel d'entrée de données portable étant réalisé en appareil à alimentation en énergie propre qui peut fonctionner de manière autonome et qui peut être mis en liaison d'échange de données avec l'appareil (22, 54) d'émission, de préférence par une liaison par enfichage, mais aussi sans fil.

4. Système de localisation et d'identification de conteneurs suivant la revendication 1, 2 ou 3, le système comportant des données relatives au conteneur, des données de position, notamment de l'instant de l'activation, des données relatives au navire et des données de chargement spéciales qui peuvent être émises en direction d'un poste (57, 61) terrestre par l'intermédiaire d'un appareil (22, 54) d'émission de signaux de position et d'identification pouvant être activés automatiquement et pouvant être programmés et par l'intermédiaire d'un système (52, 53) de satellites.

5. Système de localisation et d'identification de conteneurs suivant la revendication 4, le système pouvant être relié à un appareil (52, 53) manuel d'entrée de données portable par lequel des données spécifiques au conteneur, des données spécifiques au chargement, des données relatives au navire etc. ainsi que des données de position générées automatiquement peuvent être mises en mémoire et émises, notamment en liaison avec un système GPS.

6. Système de localisation et d'identification de conteneurs suivant la revendication 4 ou 5, le système étant monté dans un support (1) d'appareil qui est fixé dans la zone de la porte des conteneurs, notamment sur l'axe (2) de la porte.

7. Système de localisation et d'identification de conteneurs suivant la revendication 6, le support (1) d'appareil ayant une largeur de fixation pouvant être réglée et étant réalisée de manière à pouvoir être adaptée à des écarts entre axes de porte compris entre 260 mm et 450 mm.

8. Système de localisation et d'identification de conteneurs suivant la revendication 4, 5, 6 ou 7, le système comportant sur le conteneur (11) deux capteurs de pression d'eau ainsi que, sur le support (1) d'appareil, un capteur (25) de pression d'eau et un capteur (31) d'activation.

9. Système de localisation et d'identification de conteneurs suivant la revendication 4, 5, 6, 7 ou 8, le système comportant un émetteur (27) de localisation sous-marine qui travaille à une fréquence de 37,5 kHz et qui travaille notamment avec des longueurs d'impulsion de 20 ms et une succession d'impulsions de trois impulsions par seconde.

10. Système de localisation et d'identification de conteneurs suivant l'une ou plusieurs des revendications précédentes, l'appareil (22, 54) d'émission de signaux de position et d'identification comportant un dispositif permanent de correction d'erreurs qui permet une mise à jour des positions permanentes.
